# EUROPEAN PATENT SPECIFICATION

(11) **EP 3 048 663 B1**
(45) Date of publication and mention of the grant of the patent: **18.12.2019**
(21) Application number: 14846418.3
(22) Date of filing: 17.09.2014
(51) Int. Cl.: H01M 10/42, H02J 3/32, H02J 7/00, H02J 7/35, H01M 10/48

(54) **POWER STORAGE SYSTEM AND METHOD OF MAINTAINING POWER STORAGE SYSTEM**
ENERGIESPEICHERSYSTEM UND VERFAHREN ZUR ERHALTUNG EINES ENERGIESPEICHERSYSTEMS
SYSTÈME DE STOCKAGE D'ÉNERGIE ET PROCÉDÉ DE MAINTIEN DE SYSTÈME DE STOCKAGE D'ÉNERGIE

(30) Priority: 20.09.2013 JP 2013196201
(43) Date of publication of application: 27.07.2016
(73) Proprietor: Hitachi Chemical Co., Ltd., Chiyoda-ku Tokyo 100-6606 (JP)
(72) Inventor: KANOH, Mitsuyoshi, Tokyo 1006606 (JP); HARA, Takashi, Tokyo 1006606 (JP); HIROTA, Shoichi, Tokyo 1006606 (JP); EMORI, Akihiko, Tokyo 1006606 (JP)
(74) Representative: Mewburn Ellis LLP
(86) International application number: PCT/JP2014/074557
(87) International publication number: WO 2015/041249

(56) References cited:
- WO-A1-2012/124238
- WO-A1-2012/133274
- JP-A- H06 283 210
- JP-A- 2012 253 862
- JP-A- 2012 253 862
- JP-A- 2013 031 237
- JP-A- 2013 038 831
- JP-A- 2013 127 893

## Description

### TECHNICAL FIELD

The present invention relates to a power storage system using storage batteries and a maintenance technology including preventive maintenance thereof.

### BACKGROUND ART

Large scale power storage systems capable of charging/discharging a large capacity of power by connecting a plurality of storage batteries serially and in parallel have been developed as power storage systems. A power storage system charges storage batteries by feeding from a power system, a photovoltaic power generating system, and the like and supplies stable and necessary power to a load in a load facility by discharging from the storage batteries. Application examples of a large scale power storage system are to perform peak cut and peak shift of load power consumed in load facilities such as buildings and factories and leveling of natural energy such as sunlight

As storage batteries to be used for a power storage system, lithium-ion storage batteries are used instead of conventional lead-acid storage batteries. Depending on conditions such as capacity density and mass, lithium-ion storage batteries are often more advantageous than lead-acid storage batteries. Unlike lead-acid storage batteries, in case of lithium-ion storage batteries, it is necessary to continuously monitor states of the storage batteries such as voltage in order to ensure soundness. That is, a power storage system is provided with a function of monitoring states of the storage batteries.

The above function determines and detects states of the storage batteries such as a normal state, an abnormal state, or a warning state by monitoring to transmit signals in accordance with the detections. For example, when it is determined that the voltage of the storage batteries is outside the range of use, a signal indicating an abnormal state is output, and when it is determined that it is close to a threshold value within the range of use, a signal indicating warning is output The power storage system outputs an alarm when states of the storage batteries such as an abnormal state or a warning state are detected and partially stops operating the system with respect to a portion including the corresponding storage batteries in the detected states, that is, the charging/discharging function.

In the power storage system, a maintenance person performs maintenance works such as checking malfunctions of the portion including the corresponding storage batteries in accordance with the alarm based on the above signal. The maintenance person then eliminates the malfunction, ensures safety, and resumes operations of this portion. Works of the maintenance person include maintenance actions such as periodic maintenance checkups, diagnosis, and examination of storage batteries in the above states such as an abnormal state or a warning state, and replacement of parts.

A related-art example related to power storage systems is Japanese Patent Application Laid-Open Publication No. 2012-244843 (Patent Document 1). Patent Document 1 discloses a configuration of providing terminals for replacing storage batteries in a storage battery system in which a plurality of storage batteries are connected serially and in parallel.

### RELATED ART DOCUMENT

### PATENT DOCUMENT

Patent Document 1: Japanese Patent Application Laid-Open Publication No. 2012-244843

### SUMMARY OF THE INVENTION

### PROBLEMS TO BE SOLVED BY THE INVENTION

In the related-art power storage system, when arranged to monitor storage batteries such as lithium-ion storage batteries as described above, operations of the system, that is, charging/discharging functions are stopped in units of storage battery groups including the corresponding storage battery/storage batteries in accordance with signals of detection of states such as an abnormal state or a warning state due to failures or degradation of the storage batteries. Maintenance works including preventive maintenance by a maintenance person are performed in a state in which operations in units of storage battery groups are stopped. Therefore, the stopped states in units of storage battery groups continue until malfunctions of the storage batteries are eliminated by the maintenance works. The storage battery groups cannot be utilized for charging/discharging during the stop time. Such a stop time in the storage battery groups occurs also for storage batteries in a normal state other than the storage batteries in an abnormal state.

When the stop time of operation in units of storage battery groups of the power storage system becomes long as described above, a problem in that the convenience for users is lowered is caused. Related-art power storage systems including Patent Document 1 are not provided with means for coping with stop times of storage battery groups based on monitoring of the storage batteries described above, and there is room for improvement with respect to convenience.

It is an object of the present invention to provide a technology capable of reducing a stop time of operation in units of storage battery groups during maintenance works including preventive maintenance of storage battery facilities and enhancing an operation rate of the entire system with respect to the above-described power storage system.

### MEANS FOR SOLVING THE PROBLEMS

Representative embodiments of the present invention are a power storage system and a maintenance method, according to product claim1 and method claim 6, including preventive maintenance of the power storage system, and they are characterized in that they include configurations as indicated below.

A power storage system according to one embodiment includes one or more relay panels connected to one or more power control devices; a plurality of storage battery panels connected to the relay panels and equipped with one or more storage batteries; and one or more maintenance devices connected to the relay panels when performing maintenance works including preventive maintenance by a maintenance person, in which the storage battery panel transmits a first signal in which based on monitoring of a state of the storage battery, the state thereof is detected or determined to the superordinate relay panel, the relay panel transmits a second signal based on the first signal to the superordinate power control device, the maintenance device transmits, based on an operation of designating a storage battery panel to be maintained by the maintenance person, a third signal to the superordinate relay panel of the storage battery panel to be maintained, and the relay panel masks and invalidates the first signal from the storage battery panel to be maintained or the second signal based on the first signal in accordance with the third signal.

A maintenance method of the power storage system according to one embodiment is a maintenance method including preventive maintenance of a power storage system which has one or more relay panels connected to one or more power control devices, a plurality of storage battery panels connected to the relay panel and equipped with one or more storage batteries, and one or more maintenance devices connected to the relay panel when performing maintenance works including preventive maintenance by a maintenance person, the maintenance method of the power storage system including: a first step of transmitting, based on an operation by the maintenance person, a masking start instructing signal from the maintenance device to the superordinate relay panel of a storage battery panel to be maintained and masking and invalidating, in accordance with the masking start instructing signal, a first signal transmitted from the storage battery panel to be maintained to the superordinate relay panel or a second signal transmitted from the relay panel to the superordinate power control device based on the first signal by the relay panel; a second step of performing, based on an operation by the maintenance person, maintenance works for the storage battery panel to be maintained in a state in which the storage battery panel to be maintained is electrically disconnected and electrically connecting the storage battery panel after the maintenance; and
a third step of transmitting, based on an operation by the maintenance person, a masking cancel instructing signal from the maintenance device to the superordinate relay panel of the storage battery panel to be maintained and canceling the state of masking the first signal or the second signal and validating the first signal or the second signal in accordance with the masking cancel instructing signal by the relay panel.

A maintenance method of the power storage system according to one embodiment is a maintenance method including preventive maintenance of a power storage system which has one or more relay panels connected to one or more power control devices, a plurality of storage battery panels connected to the relay panel and equipped with one or more storage batteries, and one or more maintenance devices connected to the relay panel when performing maintenance works including preventive maintenance by a maintenance person, the maintenance method of the power storage system including: a first step of transmitting a first signal in which based on monitoring of a state of the storage battery, the state thereof is detected or determined to the superordinate relay panel by the storage battery panel; a second step of transmitting a second signal based on the first signal to the superordinate power control device by the relay panel; a third step of stopping an operation in units of a subordinate relay panel and the plurality of storage battery panels connected to the relay panel by the power control device based on the second signal; a fourth step of transmitting, based on an operation by the maintenance person, a masking start instructing signal from the maintenance device to the superordinate relay panel of the storage battery panel to be maintained and masking and invalidating, in accordance with the masking start instructing signal, a first signal transmitted from the storage battery panel to be maintained to the superordinate relay panel or a second signal transmitted from the relay panel to a superordinate power control device based on the first signal by the relay panel; a fifth step of resuming, based on an operation by the maintenance person, operation in units of the subordinate relay panel and the plurality of storage battery panels by the power control device in a state in which the storage battery panel to be maintained is electrically disconnected; a sixth step of performing, based on an operation by the maintenance person, maintenance works for the storage battery panel to be maintained and electrically connecting the storage battery panel after the maintenance; and a seventh step of transmitting, based on an operation by the maintenance person, a masking cancel instructing signal from the maintenance device to the superordinate relay panel of the storage battery panel to be maintained and canceling the state of masking the first signal or the second signal and validating the first signal or the second signal in accordance with the masking cancel instructing signal by the relay panel.

### EFFECTS OF THE INVENTION

According to representative embodiments of the present invention, it is possible to reduce a stop time of operation in units of storage battery groups in performing maintenance works including preventive maintenance of storage battery facilities and enhance an operation rate of the entire system.

### BRIEF DESCRIPTIONS OF THE DRAWINGS

FIG 1 is a view showing a configuration of a power storage system according to one embodiment of the present invention;
FIG 2 is a view showing a functional block configuration of the power storage system according to the present embodiment;
FIG 3 is a view showing a configuration in units of relay panels according to the present embodiment;
FIG 4 is a view showing a configuration of a supervising BCU, a BCU and a storage battery monitoring unit;
FIG 5 is a view showing a first process flow in performing maintenance works using the power storage system and the maintenance method according to the present embodiment;
FIG 6 is a view showing a second process flow in performing maintenance works using the power storage system and the maintenance method according to the present embodiment;
FIG 7 is a view showing a display example of a maintenance device of the power storage system according to the present embodiment; and
FIG 8 is a view showing an example of signals of the power storage system according to the present embodiment

### DETAILED DESCRIPTION OF PREFERRED EMBODIMENTS

Hereinafter, embodiments of the present invention will be described in detail with reference to the accompanying drawings. Note that components having the same function are denoted by the same reference symbols throughout the drawings for describing the embodiment, and the repetitive description thereof will be omitted. In the description, maintenance includes preventive maintenance in a broad sense. That is, the maintenance methods according to the embodiments include preventive maintenance methods.

### [Premise]

Problems and details of a related-art power storage system and maintenance method as premises will be additionally described hereinafter. A related-art power storage method transmits signals indicating the states such as an abnormal state or a warning state in performing maintenance works in a storage battery facility by a maintenance person, for example, when storage batteries are replaced due to a failure of a single storage battery, as a mechanism of monitoring storage batteries. Accordingly, the related-art power storage system once stops operating the system, that is, charging/discharging functions in units of storage battery groups including the corresponding storage batteries. This is due to a mechanism of controlling power in units of storage battery groups. For ensuring soundness, it is necessary to maintain states of voltages or SOCs of the plurality of storage batteries to be identical as much as possible.

The maintenance person performs maintenance works in a state in which the storage battery groups are stopped. The maintenance person confirms a storage battery in a state with some malfunction such as a failure or degradation and performs diagnosis, examination or replacement of storage batteries or peripheral equipment as necessary. The cause of malfunction is eliminated by the maintenance works and after the normal state is confirmed, the power storage system resumes operation in units of storage battery groups. The stopped state of the storage battery groups continues until the cause of malfunction is eliminated. During the stop time, even though most storage batteries among the plurality of storage batteries are in a normal state, they cannot be utilized for charging/discharging.

When the stop time in units of storage battery groups becomes long, the user might feel inconvenient For example, when it might take a long time to examine malfunctions of the storage batteries, the stop time becomes long. Moreover, particularly when the power storage system is applied to infrastructure directly linked to individual lives, it is preferable to shorten the stop time as much as possible and to utilize storage batteries in a normal state as much as possible. It is desirable to perform maintenance works in a state in which storage battery groups are operated as much as possible while ensuring safety in performing maintenance works by the maintenance person.

Note that the storage battery system of Patent Document 1 cannot cope with the problem of stop time when considering an application to a configuration of monitoring storage batteries. This system detects states such as an abnormal state or a warning state due to interruption of communication during monitoring of storage batteries when storage batteries using terminals for replacing are replaced. Accordingly, this system will stop operating the portion including the corresponding storage batteries to be replaced. That is, the stop time of the storage battery groups will become long in performing maintenance works.

### [Embodiments]

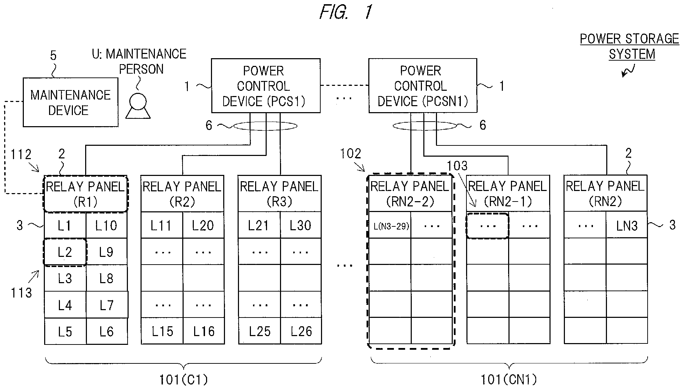

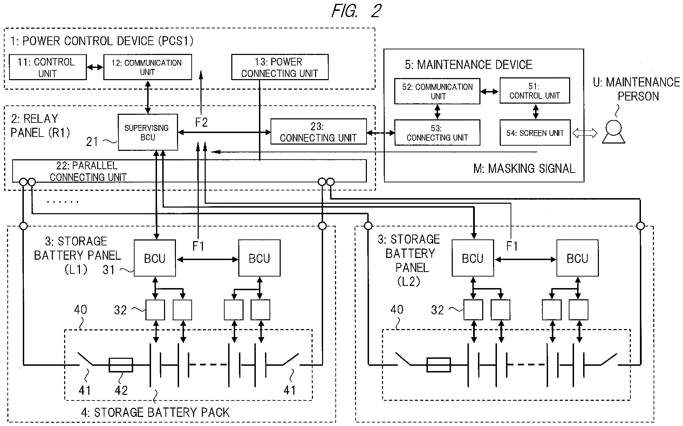

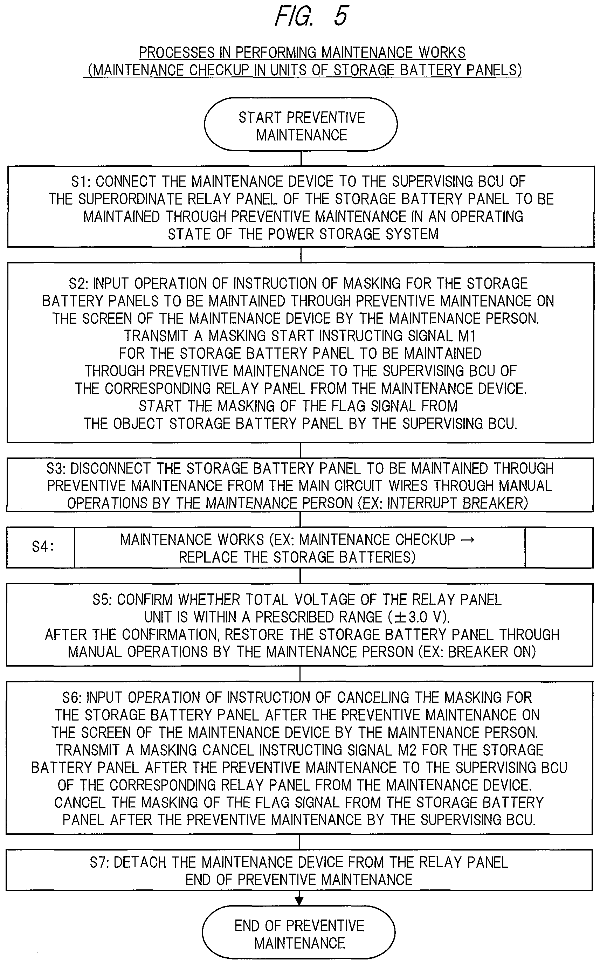

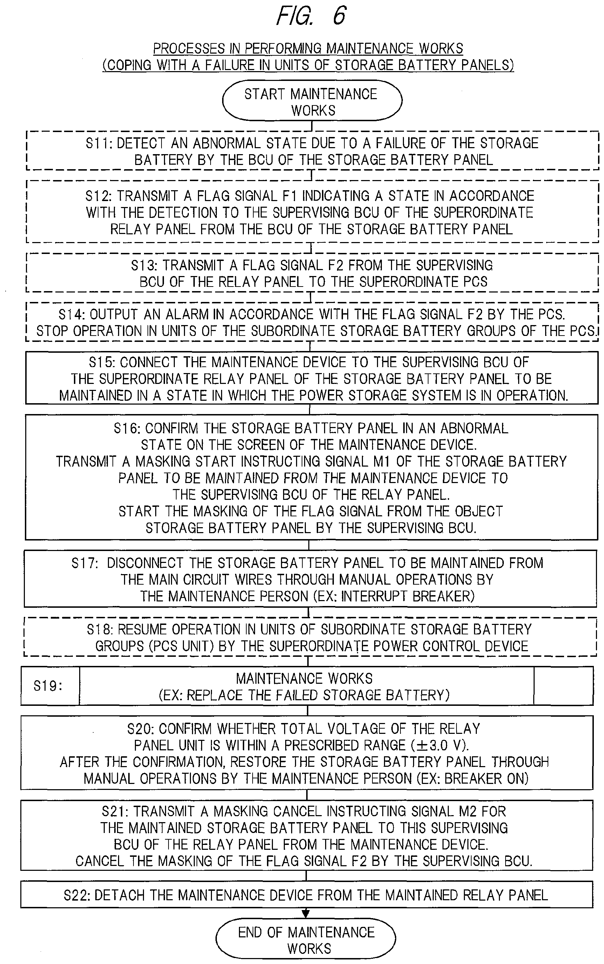

The power storage system of the present embodiment shown in FIG 1 and the like enables maintenance works while storage battery groups are in an operating state in performing maintenance works including preventive maintenance of the storage battery facility and it realizes reductions in the stop time of the storage battery groups. Therefore, the power storage system of the present embodiment provides a masking function of masking a signal of monitoring of the storage batteries based on operations in the maintenance device by the maintenance person as shown in FIG 2 and the like. The maintenance method of the power storage system of the present embodiment includes a step of performing maintenance works based on operations in the maintenance device by the maintenance person by the masking function which regards the storage battery groups of the power storage system as in an operating state, as shown in FIGs. 5 and 6.

In the present embodiment, objects of maintenance works are storage battery panels. In performing masking, a signal is transmitted from the maintenance device to a relay panel for instructing masking. Upon reception of the signal, the relay panel masks and invalidates the signal based on monitoring of storage batteries from a storage battery panel to be maintained. With this arrangement, a superordinate power control device can be operated in units of storage battery groups including the storage battery panel to be maintained. Then, the maintenance person performs electrical disconnection in units of storage battery panel to be maintained, so that the maintenance person can perform maintenance works in a state in which the storage battery group except for the storage battery panel to be maintained is operating. The power storage system of the present embodiment is characterized in that it not only enables the above operations but also enables disconnection of a stopped portion in the power storage system, irrespective of forms of superordinate power control devices.

### [Power Storage System (1)]

FIG. 1 shows an overall configuration of the power storage system of the present embodiment. The power storage system of the present embodiment includes a plurality of power control devices 1, a plurality of relay panels 2, a plurality of storage battery panels 3 and a maintenance device 5. The power storage system of FIG 1 includes PCS1 to PCSN1 which are N1 number ofpower control devices 1, R1 to RN2 which are N2 number of relay panels 2, and L1 to LN3 which are N3 number of storage battery panels 3. One power control device 1 connects N4 number of relay panels 2. For example, the case in which N4 is 3 is shown. Further, N2 is N1 × N4. One relay panel 2 connects N5 number of storage battery panels 3. N3 is N2 × N5. For example, the case in which N5 is 10 is shown. In the present embodiment, N2 number of relay panels 2 and N3 number of storage battery panels 3 are all defined as objects and ranges to which the masking function in performing maintenance works are applicable.

Reference numeral 101 denotes a PCS unit in which one power control device 1, a plurality of relay panels 2 and a plurality of storage battery panels 3 connected thereto form a group, wherein there are N1 number thereof ranging from C1 to CN1. Reference numeral 102 denotes a relay panel unit in which one relay panel 2 and a plurality of storage battery panels 3 connected thereto form a group, wherein there are N2 number thereof corresponding to R1 to RN2. Reference numeral 103 denotes a storage battery panel unit in which a plurality of storage battery packs 4 (FIG 2) constituted by one storage battery panel 3 form a group, wherein there are N3 number thereof corresponding to L1 to LN3.

The overall power storage system of FIG. 1 is constituted by connecting from C1 which is the first PCS unit 101 connected to PCS1 to CN1 which is the N1th PCS unit 101 connected to PCSN1. Reference characters C1 to CN1 which are PCS units 101 are of identical configuration. Reference characters PCS1 to PCSN1 are of identical configuration, and it is possible to consider that a single power control device 1 is constituted by connecting or uniting them. Outputs of a single power control device 1 are connected in parallel depending on a necessary amount of power. Reference characters PCS 1 to PCSN1 respectively supply power corresponding to a sum of power of each PCS unit 101. The power is designed in accordance with power required in a load facility to which they are connected, for example.

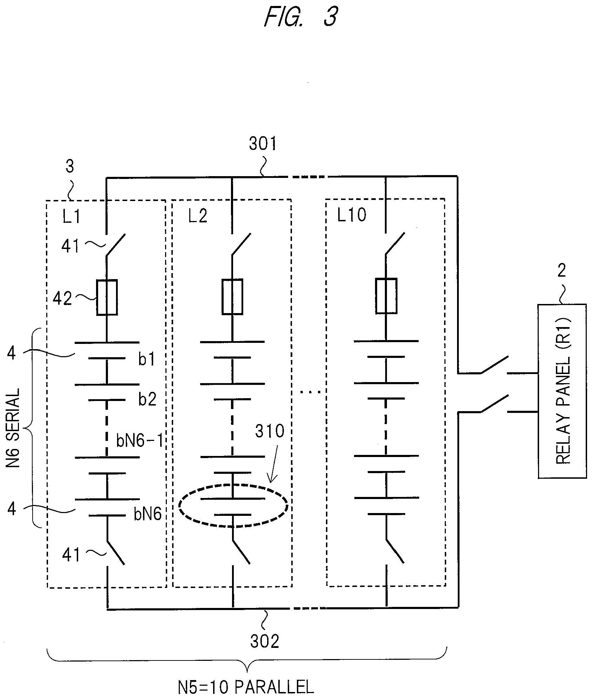

In a single PCS unit 101, one power control device 1 is connected to (N4 = 3) number of relay panels 2 through a main circuit wire 6. For example, reference characters R1 to R3 which are three relay panels 2 are connected to PCS1. In a single relay panel 2, (N5 = 10) number of storage battery panels 3 are connected in parallel. For example, reference characters L1 to L10 which are 10 storage battery panels 3 are connected to R1 in parallel. A single storage battery panel 3 is equipped with a plurality of storage battery packs 4 (FIGs. 2 and 3). For example, reference characters b1 to bN6 which are N6 numbers of storage battery packs 4 (FIG 3) are serially connected to L1. A total of N3 (= N2 × N5) number of storage battery panels 3 are connected in parallel in a single PCS unit 101.

The power control device 1 is a PCS (power conditioning system) and performs control of the power storage system and has a function of controlling charge/discharge of the storage battery groups connected thereto through the relay panels 2. The PCS is connected to a power system, a load facility, a photovoltaic power generating system, and the like. The PCS charges the storage batteries with power from the power system, the photovoltaic power generating system, or the like and supplies power obtained by discharging from the storage batteries to the load of the load facility. When states of the storage batteries such as an abnormal state or a warning state are detected by a signal from a subordinate relay panel 2, the power control device 1 generates an alarm and stops operating the PCS unit 101 which is the subordinate system portion.

Specifically, the PCS includes a DC/DC converter, a DC/AC inverter, and the like as a function of converting direct current (DC) or alternating current (AC) power for stably adjusting and utilizing power of the storage batteries or photovoltaic generation.

Note that, in the power storage system of the present embodiment, the power control devices 1 do not need to be equipped with specific functions, and it is also possible to use hardware and software of conventional PCS. Stopping operations of storage batteries and the like in the present embodiment means stopping charging/discharging functions, and in the stopped state, charge of the storage batteries and discharge from the storage batteries do not work

The maintenance device 5 is connected to the relay panels 2 by the maintenance person U when maintenance works are required. The maintenance device 5 is constituted in the form of a personal computer and the like. The maintenance device 5 may also be constituted by an exclusive device or circuit. Reference numeral 113 denotes L2 which is an example of a storage battery panel 3 to be maintained. Reference numeral 112 denotes R1 which is an example of a relay panel 2 to be connected as a superordinate of the storage battery panel 3 to be maintained. For example, the maintenance device 5 is connected to R1 in performing maintenance works of, for example, L2, as an object to be maintained.

The connection of the maintenance device 5 and the relay panel 2 (R1) of FIG 1 is one example, and it is possible to connect any one of the relay panels 2. Also, by providing a plurality of maintenance devices 5, different maintenance devices 5 may be connected to some of the relay panels 2, respectively. Moreover, a single maintenance device 5 may be connected to some of the relay panels 2. Further, a plurality of maintenance persons may use the respective maintenance devices 5.

Also, in the power storage system of FIG. 1 and the like, connections between the components may be direct connections or indirect connections in which other elements are interposed therebetween. For example, the connection between the maintenance device 5 and the relay panel 2 may be an indirect connection in which a communication network, a communication device, or the like are interposed therebetween, so that remote operations, that is, remote maintenance works can be performed.

In the power storage system of FIG. 1 and the like, elements such as the power control device 1 and the relay panel 2 are provided in plural number; however, the present invention is not limited to this, and a configuration employing a single number of each device is also possible. For example, it might be a system using a single relay panel 2. It is also possible that the storage battery panel 3 is equipped with a single storage battery. It is further possible to provide a power storage system without the relay panel 2; in this case, a plurality of storage battery panels 3 are connected to the power control device 1.

### [Power Storage System (2)]

FIG. 2 shows connection of the devices of the respective components of the power storage system of FIG. 1 and a configuration of functional blocks. The power control device 1 includes a control unit 11, a communication unit 12, and a power connecting unit 13. The control unit 11 includes a CPU, a memory, and the like and performs control processes of the power control device 1. The communication unit 12 performs communication processes with a communication unit of a supervising BCU 21 of the relay panel 2. The power connecting unit 13 is a portion connecting a plurality of terminals of a parallel connecting unit 22 of the relay panel 2 in a group and including terminals for inputting/outputting storage battery voltages.

The relay panel 2 includes the supervising BCU 21, the parallel connecting unit 22, and a connecting unit 23. The supervising BCU 21 includes a CPU, a memory, and the like and is a component of a storage battery control unit in a broad sense to be described later. The supervising BCU 21 is communicated and connected to the control unit 11 of the superordinate power control device 1 and BCUs 31 of the respective subordinate storage battery panels 3. The parallel connecting unit 22 is an interface unit for connecting a plurality of storage battery panels 3 (for example, L1 to L10) in parallel to the relay panel 2. The parallel connecting unit 22 includes terminals for connecting main circuit wires of the respective storage battery panels 3. The connecting unit 23 is an interface unit for connecting the maintenance device 5 to the relay panel 2 and includes a terminal for connecting, for example, a cable. The relay panel 2 is provided with functions of connecting, monitoring, calculating SOCs, and the like of the plurality of storage battery panels 3.

The storage battery panel 3 is equipped with a plurality of BCUs 31, a plurality of storage battery monitoring units 32 and a storage battery block 40. The BCU 31 includes a CPU, a memory, and the like and is a component of the storage battery control unit in a broad sense to be described later. The storage battery block 40 includes a plurality of serially connected storage battery packs 4, disconnecting switches 41 on both ends, and a fuse 42 on one end. The storage battery panel 3 is provided with functions of connecting, monitoring, calculating SOCs, and the like of the storage battery packs 4.

The relay panel 2 and the storage battery panel 3 include a storage battery control unit (BCU: battery control unit) in a broad sense. In the present embodiment, the storage battery control unit is comprised of the supervising BCU 21 provided in the relay panel 2 and one or more BCUs 31 provided in the storage battery panel 3. In other words, the BCUs 31 are subordinate BCUs, and the supervising BCU 21 is a superordinate BCU. The supervising BCU 21 communicates and connects a plurality of BCUs 31 to supervise and control the plurality of BCUs 31. The supervising BCU 21 comprehensively determines the state of the storage battery pack 4 groups using signals from the plurality of BCUs 31. The supervising BCU 21 and the BCUs 31 are provided with implementations corresponding to the masking function. The BCUs 31 and the BCU 21 are implemented by, for example, circuit boards.

The BCUs 31 each are of identical configuration, and representative one of the BCUs 31 is connected to the supervising BCU 21 of the superordinate relay panel 2, for example. The plurality of storage battery monitoring units 32 are connected to the BCU 31. The plurality of storage battery monitoring units 32 function as monitoring units of the storage battery block 40. One storage battery monitoring unit 32 monitors and detects states such as voltage, current, and temperature of one or more storage batteries pack 4 in the storage battery block 40. The storage battery monitoring units 32 each are of identical configuration. Note that it is also possible to employ a form in which the storage battery monitoring units 32 are integrated into the BCU 31. The BCU 31 uses the plurality of storage battery monitoring units 32 to continuously monitor states of equipment and circuits such as the plurality of storage battery packs 4 in the storage battery block 40 in the storage battery panel 3 or the peripheral power sources thereof.

The maintenance device 5 includes a control unit 51, a communication unit 52, a connecting unit 53, and a screen unit 54. The control unit 51 performs control processes of the maintenance device 5. The communication unit 52 performs communicating processes with the relay panel 2 and the power control device 1 connected through the connecting unit 53. The connecting unit 53 is an interlace unit for connection in the case in which the maintenance device 5 is connected to the relay panel 2 and the like. For example, the connecting unit 23 of the relay panel 2 and the connecting unit 53 of the maintenance device 5 are connected via a cable for performing communication. The screen unit 54 configures and provides a screen serving as a user interface when the maintenance person U performs maintenance works based on the control processes of the control unit 51.

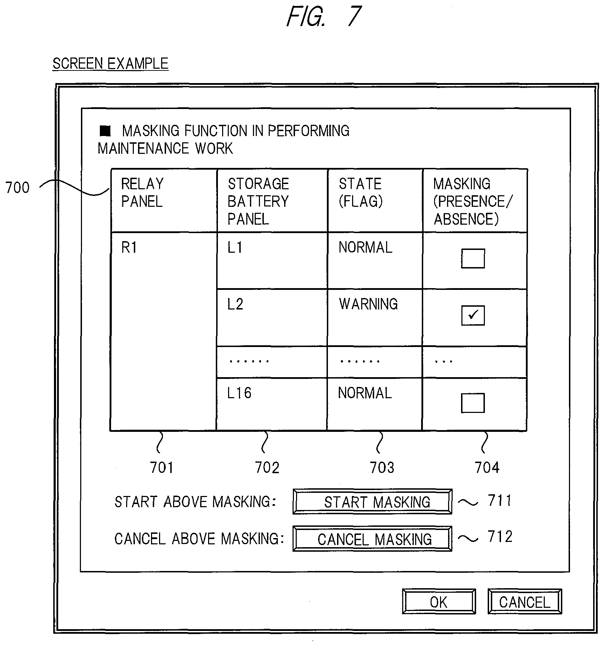

The maintenance device 5 performs processes corresponding to support functions including the masking function in performing maintenance works and provides a screen corresponding to these functions and shown in FIG 7 to be described later by the screen unit 54. The maintenance person can input instructions of starting or cancelling masking using the screen. Accordingly, a masking signal M is transmitted from the maintenance device 5 to the relay panel 2.

Reference character F1 denotes a flag signal which is transmitted from, for example, L1 or L2 which are storage battery panels 3 to, for example, reference character R1 which is a superordinate relay panel 2 based on monitoring. Reference character F2 denotes a flag signal which is transmitted from R1 which is the relay panel 2 to, for example, reference character PCS 1 which is a superordinate power control device 1. When a mask signal M is received from the maintenance device 5, the relay panel 2 performs a process of masking the corresponding flag signal to exclude a storage battery panel 3 to be maintained and designated by the mask signal M from an object to be monitored. In the present embodiment, R1 which is a relay panel 2 transmits a flag signal F2 to the PCS1 which is a superordinate power control device 1 in a state in which it has been determined that the flag signal F1 from storage battery panel as an object to be masked is invalid. Accordingly, the superordinate power control device 1 is set to be a state in which operation of the PCS unit 101 including the object storage battery panel 3 is allowed to be resumed from a state in which operation thereof is not allowed to be stopped or is allowed to be stopped once.

### [Power Storage System (3)]

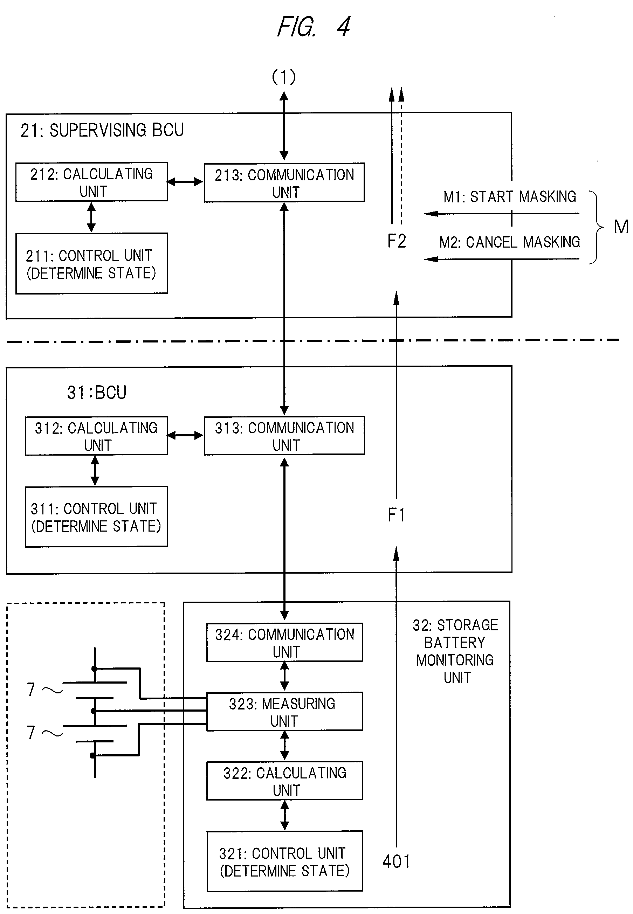

FIG 3 shows a configuration of connecting a plurality of storage battery panels 3 and main circuit wires in a relay panel unit 102. A plurality of storage battery panels 3 are connected in parallel to, for example, R1, which is a relay panel 2, through switches, main circuit wires 301 of positive electrode and main circuit wires 302 of negative electrode. Within a single storage battery block 40, there are serially connected a plurality of storage battery cells (FIG 4) of N6 number of storage battery packs 4 indicated as b1 to bN6. One storage battery pack 4 includes one or more storage battery cells 7. All of the storage battery cells 7 are lithium-ion storage batteries in the present embodiment Note that, in FIG. 3, the configuration within the storage battery panel 3 is simplified with only the storage battery block 40 illustrated. In the configuration example of FIG. 3, the plurality of storage battery cells 7 connected to the relay panel 2 are connected such that N6 number of storage battery packs 4 are connected in series and (N5 = 10) number of storage battery panels 3 are connected in parallel, wherein there are (N5 × N6) number of storage battery cells in total.

Disconnecting switches 41 are provided on both ends of the storage battery blocks 40. One disconnecting switch 41 on one end of the storage battery blocks 40 is provided with the fuse 42. Based on control of the BCU 31, ON/OFF states of the disconnecting switches 41 are switched in accordance with functions of charge/discharge and storage battery protection. Also, the disconnecting switches 41 are switched ON/OFF based on control of the BCU 31 in attaching and detaching the storage battery blocks 40. The fuse 42 is a protection circuit and is automatically cut off when the voltage difference between the plurality of storage battery packs 4 is large and there is an overload state, for example. Note that it is possible to omit the fuse 42 in some cases and the disconnecting switch 41 may have a function corresponding to that of the fuse 42.

In the storage battery blocks 40 in the plurality of storage battery panels 3 connected in parallel to the relay panel 2, when a failure occurs in one storage battery block 40, it is possible to perform operation in a degraded state using the remaining ones of the plurality of storage battery blocks 40 connected in parallel. When the storage battery pack 4 indicated by, for example, 310, which is one storage battery pack 4 in a storage battery block 40 fails and a replacement work in units of the storage battery block 40 is necessary, a flag signal F1 indicating an abnormal state or the like is transmitted to the superordinate relay panel 2 based on monitoring of this storage battery panel 3.

It is necessary that values of the voltage and SOC (state of charge: referred to as charged state or charging rate) of the storage battery packs 4 connected in parallel to the relay panel 2 and in the plurality of storage battery blocks 40 are uniform at predetermined values. That is, it is necessary that differences in potential and SOC fall within predetermined ranges. When they are not uniform, currents exceeding prescribed values might flow in replacing storage battery blocks 40 and the like, thereby not being safe.

### [Failure Case Example]

In FIG 1 and the like, examples in which malfunctions such as a failure of storage battery facilities and abnormal and warning states corresponding thereto occur according to the related-art power storage system are as follows. Note that it is assumed that the related-art power storage system includes storage battery facilities similar to those of FIG 1. Further, it is assumed that in the example in which a failure occurs, one storage battery pack 4, for example, 310 in FIG 3, of L2 which is, for example, a storage battery panel 3 in FIG 1 fails. It is assumed that it is necessary to maintain one storage battery block 40 including the storage battery pack 4 of 310 in L2.

In this case, in the related-art power storage system, a flag signal F1 indicating an abnormal state or the like due to the above failure is transmitted from the L2 which is the storage battery panel 3 to R1 which is a superordinate relay panel 2 by the function of monitoring the storage batteries, and a similar flag signal F2 is transmitted from R1 to PCS1 which is a superordinate power control device 1. Based on this flag signal F2, the PCS1 outputs an alarm and further stops operation in units of the PCS 101 of C1 including R1 which includes L2. In the stopped state of the PCS unit 101 of C1, all of the 30 storage battery panels 3, L1 to L30, become a state in which charge/discharge functions are prohibited. Until the malfunction of the storage battery panel 3 which is L2 including the faulty storage battery pack 4 is eliminated by maintenance works performed by a maintenance person, the stopped state of the PCS unit 101 of C1 continues.

According to the related-art power storage system and the maintenance method thereof, the power control device can control operation and stop in units of PCSs but it cannot control charge/discharge in units of individual relay panels or in units of individual storage battery panels of storage battery groups in units of PCSs since they are connected in parallel. Supposing that in a storage battery group of a PCS unit, one storage battery panel is in a state in which charge/discharge is stopped while another storage battery panel is in a state in which charge/discharge is in operation, a difference in SOC occurs in the storage battery group due to the differences in charge/discharge. Accordingly, overcharge, overdischarge, or the like may occur, so that it is impossible to ensure soundness. Therefore, the related-art power storage system controls operation and stop in units of PCSs for ensuring soundness. The related-art power storage system stops operation in units of relay panels including these storage battery panels and in units of PCSs including these relay panels, even in a case in which a single storage battery panel fails.

### [Masking Function]

In contrast, the power storage system of the present embodiment utilizes the masking function based on an operation from the maintenance device by a maintenance person in order to enable maintenance works in a state in which PCS units 101 of the storage battery pack 4 groups are operating. Accordingly, it is possible to instruct masking to temporally exclude a storage battery panel 3 to be maintained from an object to be monitored in the storage battery packs 4. In other words, it is possible to temporally mask and invalidate signals indicating states such as an abnormal state, a warning state, or the like which are transmitted from the storage battery panels 3 to the power control device 1 via the relay panels 2 by monitoring the storage battery packs 4.

Since the superordinate power control device 1 does not receive flag signals F2 indicating states such as an abnormal state, a warning state, or the like by executing the masking, storage battery pack 4 groups of PCS units 101 including storage battery panels 3 to be maintained will be in states in which they are not stopped, that is, in which they are operating. Masking allows the power control device 1 to see the subordinate relay panels 2 and the like being in a normal state. It is possible to perform maintenance works such as replacement of the storage battery blocks 40 by the maintenance person in a condition in which PCS units 101 are operating. When signals indicating states such as a warning state are being issued, it is possible to arbitrarily execute masking in accordance with judgments and confirmations of the states by the maintenance person.

### [Flag Signals and Mask Signals]

FIG 4 shows a configuration of the supervising BCU 21 of the relay panels 2, the BCU 31 and the storage battery monitoring unit 32 of the storage battery panel 3 and a configuration example of flag signals and masking signals.

The storage battery monitoring unit 32 includes a control unit 321, a calculating unit 322, a measuring unit 323 and a communication unit 324. The measuring unit 323 measures the voltage, current, temperature, and the like of the storage battery cells 7. The calculating unit 322 calculates SOC values and the like of the storage battery cells 7 using the measured values measured by the measuring unit 323. The communication unit 324 performs communication processes with the BCU 31. The control unit 321 refers to the measured values, makes determinations related to the states of the storage battery cells 7, and transmits a detection signal 401 indicating the states detected through the determination to the BCU1 through the communication unit 324. It is also possible to use detailed code signals to be described later as the detection signals 401.

The BCU 31 includes a control unit 311, a calculating unit 312, and a communication unit 313. The control unit 311 makes determinations related to the states of the storage battery cells 7 using the detection signals 401 from the storage battery monitoring unit 32 and transmits flag signals F1 indicating states such as a normal state, an abnormal state, a warning state obtained through the determination to the supervising BCU 21 of the superordinate relay panel 2 via the communication unit 313. The calculating unit 312 calculates SOC values and the like of the storage battery blocks 40 using the measured values transmitted from the storage battery monitoring unit 32. The communication unit 313 performs communication processes with the supervising BCU 21 and the storage battery monitoring unit 32.

States of the flag signals F1 and F2 are three types such as a normal state, a warning state, or an abnormal state in the present embodiment Note that it is possible to use detailed code signals to be described later as the flag signals.

The supervising BCU 21 of the relay panel 2 receives a flag signal F1 from the subordinate storage battery panel 3. The control unit 211 determines the state of the subordinate storage battery panel 3 using the flag signal F1 and transmits a flag signal F2 based on the determination to the superordinate power control device 1 via the communication unit 213. The calculating unit 212 calculates SOC values and the like in units of storage battery pack 4 groups of the plurality of storage battery panels 3 using information from the storage battery panel 3 and the flag signal F1. Note that the supervising BCU 21 may also transmit the flag signal F1 as it is from the subordinate storage battery panel 3 to the superordinate power control device 1 as the flag signal F2.

In accordance with operations by the maintenance person, a masking signal M is transmitted from the maintenance device 5 to the supervising BCU 21 of the superordinate relay panel 2 to which the storage battery panel 3 to be maintained is connected. The supervising BCU 21 of the relay panel 2 receives the masking signal M from the maintenance device 5. There are a masking start instructing signal M1 and a masking cancel instructing signal M2 as the masking signals M. The masking start instructing signal M1 is an instructing signal for starting masking and the masking cancel instructing signal M2 is an instructing signal for canceling masking. When the masking start instructing signal M1 is received, the supervising BCU 21 starts invalidation by the masking of the flag signal F2 based on the flag signal F1 so as to exclude the storage battery panel 3 to be designated by the signal M1 from an object to be monitored. When the masking cancel instructing signal M2 is received, the supervising BCU 21 cancels the masking state of the flag signal F2 and validates the flag signal.

In the present embodiment, invalidation by the masking is assumed that the flag signal F2 itself is not transmitted to the power control device 1 in a case in which the content of the original flag signal F2 indicates the state such as an abnormal state or a warning state. In another embodiment, invalidation by the masking may be assumed that the state such as an abnormal state or a warning state which is the content of the flag signal F2 is changed to a normal state to be transmitted to the power control device 1. In still another embodiment, invalidation by the masking may be assumed that the state such as an abnormal state or a warning state, which is the content of the flag signal F2, is changed to a state indicating that specific masking is being performed to be transmitted to the power control device 1. Note that, in such a case, the power control device 1 needs to be implemented with a different function than usual, so that it can recognize states of masking indicated by the flag signals F2.

Upon reception of the flag signal F2 from the supervising BCU 21 of the subordinate relay panel 2, the control unit 11 of the power control device 1 stops operations of charge/discharge functions of the PCS unit 101 including the subordinate relay panel 2 when the state indicated by the flag signal F2 is an abnormal state or a warning state. When flag signal F2 indicating an abnormal state or the like has not been received or when a flag signal F2 indicating a normal state has been received, the control unit 11 of the power control device 1 operates charge/discharge functions in the PCS unit 101 including the subordinate relay panel 2.

### [Process Flow (1) When Performing Maintenance]

FIG 5 shows a process flow when maintenance checkup of a storage battery panel unit 103 is performed as an example of maintenance works including preventive maintenance by a maintenance person, as a first process flow in performing maintenance works using the power storage system and the maintenance method of the first embodiment. Reference character S1 and the like indicate steps of processes and works. Preventive maintenance as used herein indicates maintenance checkup when stopping of the system and the like has been planned in advance.
(S1) In step S1, the maintenance device 5 is connected to a supervising BCU 21 of a superordinate relay panel 2 (For example, R1) of a storage battery panel 3 (For example, L2) to be maintained through preventive maintenance by a maintenance person U in a state in which the power storage system is in operation. The above-described connecting unit 53 and the connecting unit 23 are connected The maintenance device 5 displays a screen for maintenance works by the screen unit 54. The screen includes items for utilizing the masking function as in FIG 7.
(S2) In step S2, the maintenance person U uses the screen of the maintenance device 5 to designate the storage battery panel 3 (L2) to be maintained through preventive maintenance and to input a masking start instruction for the storage battery panel (L2). Based on this input operation, the control unit 51 of the maintenance device 5 transmits a masking start instructing signal M1 for the storage battery panel 3 (L2) to be maintained through preventive maintenance to the supervising BCU 21 of the relay panel 2 (R1).
   Upon reception of the masking start instructing signal M1, the supervising BCU 21 of the relay panel 2 (R1) masks and invalidates the flag signal F2 for the storage battery panel 3 (L2) to be maintained through preventive maintenance and designated by the signal. By starting the masking, the storage battery panel 3 (L2) to be maintained through preventive maintenance becomes a state in which it is excluded from the object to be monitored when seen from the power control device 1, and an operating state of the relay panel unit including the storage battery panel 3 (L2) and the PCS unit are maintained.
(S3) In step S3, prior to maintenance works in step S4, the storage battery panel 3 (L2) to be maintained through preventive maintenance is disconnected from the main circuit wires 301, 302 through manual operation by the maintenance person U by, for example, switching off (OFF) the disconnecting switch 41 corresponding to a breaker. Note that the maintenance person may also detach the BCU 31, depending on contents of maintenance. Accordingly, the storage battery panel 3 (L2) to be maintained through preventive maintenance is in a state in which it is electrically disconnected from the power storage system, so that operations can be safely performed. In a related-art power storage system, since a signal indicating states such as an abnormal state or a warning state is transmitted or communication is completely interrupted by disconnecting the storage battery panel, operation of a portion including this storage battery panel is stopped based on determination of a superordinate power control device. In the present embodiment, due to the masking function, operation of the portion is not stopped, so that it is possible to perform maintenance works while storage battery panels 3 other than the storage battery panel 3 to be maintained are in an operating state.
(S4) In step S4, the maintenance person U performs works of maintenance checkup related to the storage battery panel 3 (L2) to be maintained through preventive maintenance as the maintenance work As a result of maintenance checkup, for example, the storage battery block 40 including the storage battery pack 4 is replaced. The maintenance person detaches the object storage battery block 40 and attaches a storage battery block 40 after replacement in a state in which the breaker of the storage battery panel 3 is OFF.
(S5) In step S5, the maintenance person U confirms the total voltage of the superordinate relay panel 2 (R1) of the storage battery panel 3 (L2) to be maintained through preventive maintenance after the maintenance work This total voltage is a total voltage of the relay panel unit and is a voltage obtained by summing voltages of all of the plurality of storage battery panels 3 connected to the relay panel 2. This total voltage is also referred to as parallel restoration voltage. The total voltage can be confirmed by connecting an exclusive measurement device to the relay panel 2 for confirming measured values such as potential differences or SOC differences. If the relay panel 2 includes a function of measuring total voltages, it is also possible to use such means. Alternatively, if the maintenance device 5 includes a function of measuring total voltages, it is also possible to use it. Confirmation of the total voltage corresponds to confirming that the potential differences and SOC differences in the storage battery pack 4 groups are small, thereby ensuring soundness.
   The maintenance person confirms whether the total voltage of the relay panel unit is within a prescribed range, for example, within ±3.0 V. After confirming that the value is within this range, the maintenance person performs operations of connecting and restoring the storage battery panel 3 (L2) to be maintained to the main circuit wires 301, 302 of the relay panel 2 (R1) by switching ON the disconnecting switch 41 corresponding to the breaker. If the value is not within this range, the maintenance person performs charge/discharge using a known electronic load device and the like to adjust the voltage to fall within this range.
(S6) In step S6, the maintenance person U inputs an instruction of canceling the masking of the maintained storage battery panel 3 (L2) as an object of the instruction on the screen of the maintenance device 5. Based on the input operation, the maintenance device 5 transmits a masking cancel instructing signal M2 which regards the maintained storage battery panel 3 (L2) as an object thereof to the supervising BCU 21 of the relay panel 2. Upon reception of the masking cancel instructing signal M2, the supervising BCU 21 of the relay panel 2 cancels the masking state of the object storage battery panel 3 (L2) which has been started in step S2 to validate the flag signal F2 to the superordinate power control device 1.
(S7) In step S7, the maintenance person U detaches the maintenance device 5 from the relay panel 2. By performing the above steps, it is possible to perform works of maintenance checkup as maintenance works performed in an operating state with a portion thereof being disconnected and to perform preventive maintenance in a state in which storage battery groups are not stopped.

### [Process Flow (2) When Performing Maintenance]

FIG 6 shows a process flow when coping with a failure in a case in which a failure occurs in a storage battery panel unit 103 as an example of maintenance works by a maintenance person, as a second process flow in performing maintenance works using the power storage system and the maintenance method of the first embodiment Maintenance as used herein indicates that a state such as an abnormal state of the system and the like is returned to a normal state through recovery. In FIG. 6, steps indicated by solid line frames are substantially same to the steps of FIG. 5, and steps indicated by broken line frames are portions different from the steps of FIG. 5.
(S11) In step S11, the BCU3 of a storage battery panel 3 (For example, L2) detects and determines states such as an abnormal state or a warning state of storage battery cells 7 based on a detection signal 401 of monitoring from the storage battery monitoring unit 32. For example, when a voltage of a storage battery cell 7 exceeds a prescribed value, the BCU 31 determines that there is an abnormal state due to a failure of the storage battery cell 7.
(S12) In step S12, the BCU 31 of the storage battery panel 3 (L2) transmits a flag signal F1 indicating an abnormal state in accordance with the detection in step S11 to a supervising BCU 21 of a superordinate relay panel 2 (R1).
(S13) In step S13, upon reception of the flag signal F1 from the storage battery panel 3 (L2), the supervising BCU 21 of the relay panel 2 (R1) determines a state of the relay panel unit including the storage battery panel 3 and transmits a flag signal F2 indicating the determined state to a superordinate power control device 1 (PCS1). For example, the supervising BCU 21 transmits a flag signal F2 indicating an abnormal state similarly to the content of the flag signal F1.
(S14) Is step S14, upon reception of the flag signal F2 from the relay panel 2 (R1), the power control device 1 (PCS1) generates an alarm in accordance with the abnormal state indicated by the flag signal F2. Along with that, the power control device 1 (PCS 1) once stops operation of the charge/discharge functions of the storage battery pack 4 group of a PCS unit 101 (C1) including the storage battery panel 3 (L2) in the abnormal state indicated by the flag signal F2. The maintenance person U confirms the necessity of maintenance by receiving the alarm.
(S15) In step S15, the maintenance person U connects the maintenance device 5 to the supervising BCU 21 of the superordinate relay panel 2 (R1) of the storage battery panel 3 (L2) to be maintained in a state in which the power storage system is in operation, similarly to the above-described step S1.
(S16) In step S16, the maintenance person U confirms information of the storage battery panel 3 (L2) of which an abnormal state has been detected on the screen of the maintenance device 5. The maintenance person inputs a masking start instruction for the storage battery panel 3 (L2) as an object to be maintained on the screen. Accordingly, the maintenance device 5 transmits a corresponding masking start instructing signal M1 to the supervising BCU 21 of the relay panel 2 (R1). Upon reception of the masking start instructing signal M1, the supervising BCU 21 of the relay panel 2 (R1) masks and invalidates the flag signal F2 for the storage battery panel 3 (L2) to be maintained.
(S17) In step S17, the storage battery panel 3(L2) to be maintained is disconnected from the main circuit wires 301, 302 through manual operation by the maintenance person U.
(S18) In step S18, since no flag signal F2 indicating an abnormal state is received due to the masking in step S16, the superordinate power control device 1 (PCS1) resumes operation of the PCS unit 101 (C1) including the storage battery panel 3 (L2) to be maintained. That is, the PCS unit 101 (C1) changes from the stopped state in step S14 to the operating state. Only the storage battery panel 3 (L2) to be maintained from among the PCS unit 101 (C1) is in the disconnected state in step S17.
(S19) In step S19, the maintenance person U confirms the abnormal state due to a failure and performs maintenance works such as replacing storage battery packs 4 with respect to the storage battery panel 3 (L2) to be maintained which is in the disconnected state in step S17.
(S20) In step S20, the maintenance person U confirms the total voltage of the superordinate relay panel 2 (R1) of the storage battery panel 3 (L2) to be maintained. The maintenance person confirms whether the total voltage of the relay panel unit is within a prescribed range, for example, within ±3.0 V After confirming, the maintenance person performs operations of connecting and restoring the storage battery panel 3 (L2) to be maintained to the main circuit wires 301, 302 of the relay panel 2 (R1).
(S21) In step S21, the maintenance person U inputs an instruction of canceling the masking of the maintained storage battery panel 3 (L2) as an object of the instruction on the screen of the maintenance device 5. Accordingly, the maintenance device 5 transmits a corresponding masking cancel instructing signal M2 to the supervising BCU 21 of the relay panel 2. Upon reception of the masking cancel instructing signal M2, the supervising BCU 21 of the relay panel 2 validates the flag signal F2 to the superordinate power control device 1 by canceling the masking state of the object storage battery panel 3 (L2) which has been started in step S16.
(S22) In step S22, the maintenance person U detaches the maintenance device 5 from the relay panel 2. It is possible to perform maintenance works in a short stop time by performing the above steps.

As another example of maintenance works, maintenance works for peripheral equipment and circuits such as the power source other than the storage battery packs 4 provided in the storage battery panels 3 as objects to be maintained can be similarly performed. Further, while the above is an example in which detection and determination is performed as the "abnormal" state due to a failure, the masking function is similarly applicable also to cases of other states. For example, when detecting and determining interruption of communication through monitoring of the storage battery packs 4 as a "warning" state, it is possible to perform masking of the flag signal F2 indicating warning thereby.

Note that, as a matter of course, in operation, top priority is given to ensuring safety when utilizing the masking function in performing maintenance works, and masking is executed upon confirmation and judgment of states by the maintenance person. For example, when it has been confirmed that effects of a storage battery panel 3 in an "abnormal" state are limited to be within the storage battery panel 3, the maintenance person can perform masking of this storage battery panel 3 to be maintained.

Note that, depending on power storage systems, it is also possible to stop the entire function of monitoring the storage batteries. However, in such a case, since the entire power storage system is in a stopped state, it is not desirable. By recording detection signals 401 by monitoring and related information thereof, the power storage system can perform reference or examination at a later time.

### [Screen Example]

FIG 7 shows a screen example of a masking function in performing maintenance works in the maintenance device 5. The maintenance device 5 provides an interface for supporting maintenance works including the masking function. The maintenance person can easily utilize the masking function while confirming states of the power storage system on the screen of the maintenance device 5. The maintenance person sets an instruction of masking a storage battery panel 3 to be maintained on the screen for the masking function.

On the screen of FIG. 7, the table 700 includes items of relay panel 701, storage battery panel 702, state 703 and masking 704. The relay panel 701 displays a piece of identification information of the relay panels 2. The storage battery panel 702 displays pieces of identification information of the storage battery panels 3. The state 703 displays states of the storage battery panels 3 based on the above-described flag signals. The states include a normal state, a warning state, an abnormal state, and the like. It is also possible to use code information which is described later and is more detailed than the flag signals in the states 703. The masking 704 displays check buttons for designating presence/absence of masking for each of the storage battery panels 3.

By referring to the table 700, the maintenance person can confirm states of the plurality of storage battery panels 3 for each of the relay panels 2, and by turning on the check buttons on the item of the masking 704, it is possible to designate masking of storage battery panels 3 to be maintained.

The maintenance person can instruct start of masking corresponding to the state of the masking 704 in the table 700 by pressing a masking start button indicated by 711. Corresponding thereto, the above-described masking start instructing signal M1 is transmitted. Further, by pressing the masking cancel button indicated by 712, it is possible to instruct cancel of masking corresponding to the state of the masking in the table 700. Corresponding thereto, the above-described masking start instructing signal M2 is transmitted.

The screen of the masking function is not limited to the style of the table shown in FIG. 7, and it is also possible to employ a style in which a connection configuration as that of FIG 1 is shown graphically wherein the maintenance person can designate an object storage battery panel therefrom.

### [Code Signals]

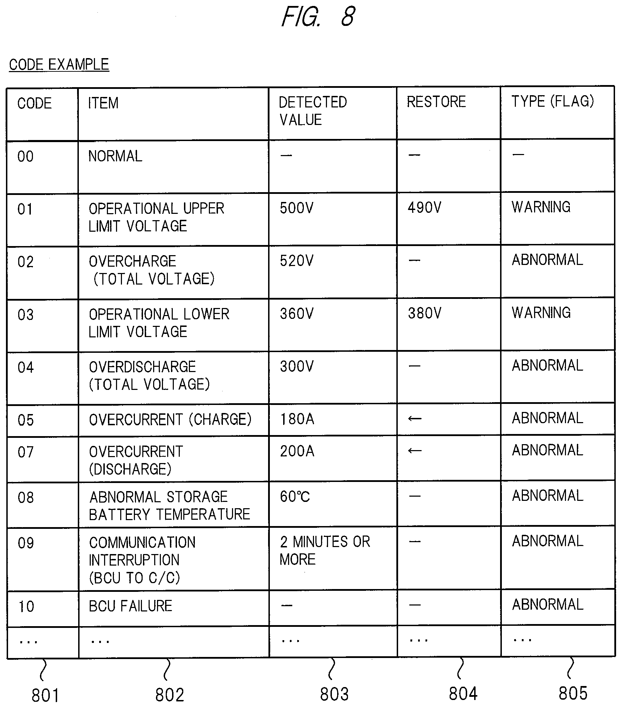

FIG 8 shows examples of code signals which is a configuration example related to signals issued based on monitoring of the storage batteries. A related-art power storage system issues code signals illustrated in FIG 8 as signals by monitoring. Also in the power storage system of the present embodiment, not only the above-described flag signals, but also such code signals can be used.

In the table of FIG. 8, there are indicated, in the order from the left column, code 801, item 802, detected value 803, restore 804 and type 805. The code 801 is indicated here as a numeric value such as "01." The item 802 indicates, for example, explanations of contents or states of the code 801. The detected value 803 indicates that the code 801 is generated under the condition when the value of the detected value 803 is detected. The restore 804 indicates that restorations are made under the condition when values of 804 are satisfied. The type 805 indicates values in which a plurality of codes are roughly divided into several types wherein there are three types of abnormal, warning, and normal values corresponding to the above-described flag signals. The above-described flag signals F1, F2 indicate an abnormal state, a warning state, or the like corresponding to the values of the types of codes.

Referring to some code examples, code "00" indicates a normal state, and no flags such as abnormal or warning are generated. Code "01" indicates "operational upper limit voltage" which is output when the voltage of storage batteries becomes 500 V or more, and the type is "warning." Code "02" indicates "overcharge" which is output when the total voltage of a relay panel becomes 520 V or more, and the type is "abnormal." Code "03" indicates "operational lower limit voltage" which is output when the voltage of storage batteries becomes 360 V or less, and the type is "warning." Code "04" indicates "overdischarge" which is output when the total voltage of a relay panel becomes 300 V or less, and the type is "abnormal."

Code "05" indicates "overcurrent" which is output when the voltage of storage batteries becomes 180 A or more, and the type is "warning." Code "08" indicates "abnormal storage battery temperature" which is output when the temperature of a storage battery pack 4 becomes 60 degrees Celsius or more, and the type is "abnormal." Code "09" indicates "communication interruption" which is output when communication between a BCU 31 and a supervising BCU 21 has been interrupted for two minutes or more, and the type is "abnormal." Code "10" indicates "BCU failure" which is output when a BCU 31 fails, and the type is "abnormal."

Codes indicating "abnormal" as the type, particularly "02," "08," and "10," for example, are codes which require attention in that operation of these portions needs to be stopped immediately when these states are detected. In such a case, the maintenance person gives top priority to coping with these abnormalities, and utilization of the masking function should be judged carefully.

In cases of codes indicating "warning" as the type, for example, code "01," when the warning state is detected, operation of the corresponding portion in accordance with judgments and confirmations of the state by the maintenance person may cause no problems in most cases, since the warning state is not so serious as the abnormal state. In this case, utilizing the above-described masking function to set the system in an operating state will reduce the stop time.

### [Effects and the like]

As explained so far, according to the power storage system and the maintenance method of the present embodiments, it is possible to reduce the time of stopping operation in units of storage battery groups in performing maintenance works of the storage battery facilities to thereby improve the operation rate of the entire system. Accordingly, convenience for users is improved. The present embodiments make it possible to perform maintenance works in a state in which storage battery groups other than storage batteries to be maintained are in operation by utilizing the masking function with respect to the time of stopping storage battery groups based on monitoring of the storage batteries. Specifically, it is possible to perform maintenance works in a state in which storage battery groups are in operation, in a large-sized power storage system which includes a large number of lithium ion rechargeable storage batteries and the function of monitoring thereof and is assumed to be used regularly. When a malfunction of the facility including storage batteries is generated, a maintenance person can utilize the masking function in accordance with a judgment of the state and degree of the malfunction. The maintenance person can easily utilize the masking function while confirming the state on a screen of the maintenance device.

In the foregoing, the invention made by the inventors of the present invention has been concretely described based on the embodiments. However, it is needless to say that the present invention is not limited to the foregoing embodiments and various modifications and alterations can be made within the scope of the present invention. Some modification examples of the present embodiment are as follows.
(1) An embodiment may also be configured such that the relay panel 2 is implemented with the same function as the masking function of the maintenance device 5. For example, a button for utilizing masking function is provided on an operation panel of the relay panels 2. The maintenance person inputs masking instructions through the function of the relay panel 2.
(2) As for the masking function of the above embodiment, flag signal F2 transmitted from the supervising BCU 21 of the relay panel 2 to the power control device 1 is an object to be masked. In another embodiment of the masking function, flag signal F1 from the BCU 31 of the storage battery panel 3 may also be an object to be masked. For example, a masking signal from the maintenance device 5 is transmitted to the BCU 31 of the storage battery panel 3 via the relay panel 2. The BCU 31 of the storage battery panel 3 performs masking of the flag signal F1 from the storage battery panel 3 to the relay panel 2 as an object in accordance with the masking signal, for example, a masking start instructing signal M1. Accordingly, the flag signal F2 which is based on the flag signals F1 is also masked.
(3) An embodiment may also be configured such that whether the masking function is applicable or not is set and controlled in accordance with detailed states of the storage battery panel 3. The relay panel 2 detects or determines detailed states of the storage battery panel 3 using the above-described detection signals, flag signals or code signals. The relay panel 2 determines whether masking by masking signals is applicable or not in accordance with states of the storage battery panel 3 and executes masking in accordance with the determination. For example, in a case of a flag indicating a "warning" state or in a case of a specific code, the relay panel 2 determines that masking is applicable, and in a case of a flag indicating an "abnormal" state or in a case of a specific code, the relay panel 2 determines that masking is not applicable. A screen for setting to utilize this function is provided by the maintenance device 5. The maintenance person sets in what kind of states and signals masking is applicable by using the screen. The above-described function makes it possible to perform conventional control and operation in specific states.
(4) The maintenance device 5 may display not only a normal state or an abnormal state as a state of the storage battery panel 3 but also states of electric disconnection and connection corresponding to the above-described steps S3 and S5, for example.

### INDUSTRIALAPPLICABILITY

The present invention is applicable to a power storage system and preventive maintenance and a maintenance work thereof.

### EXPLANATION OF REFERENCE CHARACTERS

1... Power control device, 2... Relay panel, 3... Storage battery panel, 4... Storage battery pack, 5... Maintenance device, 6... Main circuit wire, 7... Storage battery cell, 11... Control unit, 12... Communication unit, 13... Power connecting unit, 21... Supervising BCU, 22... Parallel connecting unit, 23... Connecting unit, 32... Storage battery monitoring unit, 40... Storage battery block, 41... Disconnecting switch, 42... Fuse, 51... Control unit, 52... Communication unit, 53... Connecting unit, 54... Screen unit, 101... PCS unit, 102... Relay panel unit, 103... Storage battery panel unit, F1, F2... Flag signal, M... Mask signal, M1... Masking start instructing signal, M2... Masking cancel instructing signal.

## Claims

1. A power storage system comprising:
a plurality of storage battery panels (3) including each storage battery panel equipped with one or more storage batteries;
one or more relay panels (2) electrically connected and connected in communication with the plurality of storage battery panels;
one or more power control devices (1) electrically connected to and connected in communication with the one or more relay panels and controlling charge/discharge of the plurality of storage battery panels; and
a maintenance device (5) for supporting maintenance works of the plurality of storage battery panels by a maintenance person,
**characterized in that** the storage battery panel includes:
a monitoring unit (32) adapted to monitor a state including voltage, current, and temperature of the one or more storage batteries; and
a storage battery control unit (BCU31) adapted to transmit, based on the monitoring of the state, a first signal (F1) for transmitting the state to the relay panel, to the relay panel,
the relay panel includes:
a parallel connecting unit (22) to which the one or more storage batteries of the plurality of storage battery panels are connected in parallel;
a connecting unit (23) to which the maintenance device is connected in communication; and
a supervising storage battery control unit (supervising BCU 21) adapted to receive the first signal and adapted to transmit a second signal (F2) for transmitting the state indicated by the first signal to the power control device,
the power control device adapted to receive the second signal, and when the state indicated by the second signal is a specific state, adapted to control such that the plurality of storage battery panels do not operate in units of the plurality of storage battery panels including the storage battery panel which is connected to the relay panel and from which the first signal has been transmitted,
the maintenance device includes:
a connecting unit (53) to be connected in communication with the relay panel, the connecting unit connected in communication with the relay panel connected to the storage battery panel to be maintained, among the plurality of relay panels, by the maintenance person before the maintenance person starts maintenance works on a storage battery panel to be maintained, among the plurality of storage battery panels, and the connecting unit disconnected in communication with the relay panel by the maintenance person after the maintenance works are finished;
a screen unit (54) adapted to receive input operation by the maintenance person and adapted to display a screen for supporting the maintenance works for the maintenance person; and
a control unit (51) adapted to transmit a third signal (M) for temporarily invalidating the first signal or the second signal to the supervising storage battery control unit of the relay panel connected to the storage battery panel to be maintained, when operation designating the storage battery panel to be maintained by the maintenance person is received via the screen unit, and
the supervising storage battery control unit of the relay panel, when the third signal is received, adapted to temporarily invalidate the first signal or the second signal.

2. The power storage system according to claim 1,
wherein the control unit of the maintenance device is adapted to transmit, when operation of invalidation start instruction for the storage battery panel to be maintained by the maintenance person is received via the screen unit, an invalidation start signal as the third signal, and when operation of invalidation end instruction is received, adapted to transmit an invalidation end signal as the third signal, and
wherein the supervising storage battery control unit of the relay panel is adapted to start, when the invalidation start signal is received, invalidation of the first signal or the second signal, and adapted to end, when the invalidation end signal is received, invalidation of the first signal or the second signal.

3. The power storage system according to claim 1,
wherein the screen unit of the maintenance device is adapted to display, on the screen, an item of displaying a piece of identification information and the state of each of the plurality of storage battery panels, an item of selecting and designating a storage battery panel being an object of the invalidation corresponding to the storage battery panel to be maintained among the plurality of storage battery panels, and an item of inputting an instruction on the third signal for the invalidation.

4. The power storage system according to claim 1,
wherein the first signal or the second signal includes a normal state, an abnormal state, or a warning state, as the state, and
when the state is an abnormal state or a warning state, the invalidation is applicable.

5. The power storage system according to claim 1,
wherein the first signal or the second signal includes a code signal indicating at least one state of overvoltage, overcurrent, overcharge, overdischarge, excess temperature, or communication interruption, and
wherein, when the state is a specific code signal indicating a specific state, the invalidation is applicable.

6. A maintenance method in a power storage system including:
a plurality of storage battery panels including each storage battery panel equipped with one or more storage batteries;
one or more relay panels electrically connected and connected in communication with the plurality of storage battery panels;
one or more power control devices electrically connected to and connected in communication with the one or more relay panels and controlling charge/discharge of the plurality of storage battery panels; and
a maintenance device for supporting maintenance works of the plurality of storage battery panels by a maintenance person,
the maintenance method comprising the steps of:
the storage battery panel transmitting, based on the monitoring of a state including voltage, current, and temperature of the one or more storage batteries, a first signal for transmitting the state to the relay panel, to the relay panel;
the relay panel receiving the first signal and transmitting a second signal for transmitting the state indicated by the first signal to the power control device, to the power control device;
the power control device receiving the second signal, and when the state indicated by the second signal is a specific state, controlling such that the plurality of storage battery panels do not operate in units of the plurality of storage battery panels including the storage battery panel which is connected to the relay panel and from which the first signal has been transmitted;
before the maintenance person starts maintenance works on a storage battery panel to be maintained, among the plurality of storage battery panels, the maintenance person connecting the maintenance device in communication with the relay panel connected to the storage battery panel to be maintained, among the plurality of relay panels;
the maintenance device receiving input operation by the maintenance person and displaying a screen for supporting the maintenance works for the maintenance person, and when operation designating the storage battery panel to be maintained by the maintenance person is received via the screen, transmitting a third signal for temporarily invalidating the first signal or the second signal, to the relay panel connected to the storage panel to be maintained;
the relay panel, when the third signal is received, temporarily invalidating the first signal or the second signal;
performing the maintenance works of the storage battery panel to be maintained by the maintenance person in a state where the invalidation is performed and the storage battery panels other than the storage battery panel to be maintained are in operation; and
after the maintenance works end, the maintenance device being disconnected in communication with the relay panel.

7. The maintenance method in a power storage system according to claim 6, the method comprising the steps of:
the maintenance device transmitting an invalidation start signal as the third signal when operation of invalidation start instruction for the storage battery panel to be maintained by the maintenance person is received via the screen;
the relay panel starting invalidation of the first signal or the second signal when the invalidation start signal is received;
the maintenance device transmitting an invalidation end signal as the third signal when operation of invalidation end instruction for the storage battery panel to be maintained by the maintenance person is received via the screen; and
the relay panel ending invalidation of the first signal or the second signal when the invalidation end signal is received.

8. The maintenance method in a power storage system according to claim 6,
wherein, at the step of performing the maintenance works of the storage battery panel to be maintained, the maintenance works are performed by the maintenance person in a state where the storage battery panel to be maintained is electrically disconnected, and then, the storage battery panel to be maintained is electrically connected.

9. The maintenance method in a power storage system according to claim 6, the method comprising the steps of:
the power control device receiving the second signal, outputting an alarm when the state indicated by the second signal is in a specific state, and stopping operation of the plurality of storage battery panels in units of the plurality of storage battery panels including the storage battery panel which is connected to the relay panel and from which the first signal has been transmitted;
the storage battery panel to be maintained being electrically disconnected by the maintenance person;
in a state where the storage battery panel to be maintained is electrically disconnected, the power control device resuming the operation of the plurality of storage battery panels in units of the plurality of storage battery panels connected to the relay panel;
in a state where the storage battery panels other than the storage battery panel to be maintained are in operation, performing the maintenance works of the storage battery panel to be maintained by the maintenance person;
electrically connecting to the maintained storage battery panel; and
canceling the invalidation after the maintenance works are finished.

## Patentansprüche

1. Energiespeichersystem, umfassend:
eine Vielzahl von Speicherbatterietafeln (3), wobei jede Speicherbatterietafel mit einer oder mehreren Speicherbatterien ausgestattet ist;
eine oder mehrere Relaistafeln (2), die mit der Vielzahl von Speicherbatterietafeln elektrisch verbunden und kommunikativ verbunden sind;
eine oder mehrere Energiesteuervorrichtungen (1), die mit der einen oder den mehreren Relaistafeln elektrisch verbunden und kommunikativ verbunden sind und das Laden/Entladen der Vielzahl von Speicherbatterietafeln steuern; und
eine Wartungsvorrichtung (5) zum Unterstützen von Wartungsarbeiten an der Vielzahl von Speicherbatterietafeln durch eine Wartungsperson,
**dadurch gekennzeichnet, dass** die Speicherbatterietafel Folgendes umfasst:
eine Überwachungseinheit (32), die dafür ausgelegt ist, einen Zustand einschließlich Spannung, Strom und Temperatur der einen oder mehreren Speicherbatterien zu überwachen; und
eine Speicherbatteriesteuereinheit (BCU31), die dafür ausgelegt ist, basierend auf dem Überwachen des Zustands ein erstes Signal (F1) zum Senden des Zustands an die Relaistafel an die Relaistafel zu senden,
wobei die Relaistafel Folgendes umfasst:
eine Parallelverbindungseinheit (22), mit der die eine oder mehreren Speicherbatterien der Vielzahl von Speicherbatterietafeln parallelgeschaltet sind;
eine Verbindungseinheit (23), mit der die Wartungsvorrichtung kommunikativ verbunden ist; und
eine Kontroll-Speicherbatteriesteuereinheit (Kontroll-BCU 21), die dafür ausgelegt ist, das erste Signal zu empfangen, und dafür ausgelegt ist, ein zweites Signal (F2) zum Senden des durch das erste Signal angegebenen Zustands an die Energiesteuervorrichtung zu senden,
wobei die Energiesteuervorrichtung dafür ausgelegt ist, das zweite Signal zu empfangen, und, wenn der durch das zweite Signal angegebene Zustand ein spezifischer Zustand ist, dafür ausgelegt ist, Steuerung so auszuführen, dass die Vielzahl von Speicherbatterietafeln nicht in Einheiten der Vielzahl von Speicherbatterietafeln, einschließlich der Speicherbatterietafel, die mit der Relaistafel verbunden ist und von der aus das erste Signal gesendet wurde, arbeiten,
wobei die Wartungsvorrichtung Folgendes umfasst:
eine Verbindungseinheit (53), die mit der Relaistafel kommunikativ verbunden wird, wobei die Verbindungseinheit mit der Relaistafel, die mit der zu wartenden Speicherbatterietafel verbunden ist, aus der Vielzahl von Relaistafeln durch die Wartungsperson kommunikativ verbunden wird, bevor die Wartungsperson Wartungsarbeiten an einer zu wartenden Speicherbatterietafel aus der Vielzahl von Speicherbatterietafeln beginnt, und die Verbindungseinheit durch die Wartungsperson von der Relaistafel kommunikativ getrennt wird, nachdem die Wartungsarbeiten abgeschlossen sind;
eine Bildschirmeinheit (54), die dafür ausgelegt ist, eine durch die Wartungsperson vorgenommene Eingabeoperation zu empfangen, und dafür ausgelegt ist, einen Bildschirm zum Unterstützen der Wartungsarbeiten für die Wartungsperson anzuzeigen; und
eine Steuereinheit (51), die dafür ausgelegt ist, ein drittes Signal (M) zum temporären Invalidieren des ersten Signals oder des zweiten Signals an die Kontroll-Speicherbatteriesteuereinheit der Relaistafel, die mit der zu wartenden Speicherbatterietafel verbunden ist, zu senden, wenn eine Operation, die die durch die Wartungsperson zu wartende Speicherbatterietafel zuweist, über die Bildschirmeinheit empfangen wird, und
wobei die Kontroll-Speicherbatteriesteuereinheit der Relaistafel bei Empfangen des dritten Signals dafür ausgelegt ist, das erste Signal oder das zweite Signal temporär zu invalidieren.

2. Energiespeichersystem nach Anspruch 1,
wobei die Steuereinheit der Wartungsvorrichtung dafür ausgelegt ist, bei Empfangen einer Operation eines Invalidierungsstartbefehls für die durch die Wartungsperson zu wartende Speicherbatterietafel über die Bildschirmeinheit ein Invalidierungsstartsignal als das dritte Signal zu senden, und dafür ausgelegt ist, bei Empfangen einer Operation eines Invalidierungsendbefehls ein Invalidierungsendsignal als das dritte Signal zu senden, und
wobei die Kontroll-Speicherbatteriesteuereinheit der Relaistafel dafür ausgelegt ist, bei Empfangen des Invalidierungsstartsignals eine Invalidierung des ersten Signals oder des zweiten Signals zu starten, und dafür ausgelegt ist, bei Empfangen des Invalidierungsendsignals eine Invalidierung des ersten Signals oder des zweiten Signals zu beenden.

3. Energiespeichersystem nach Anspruch 1,
wobei die Bildschirmeinheit der Wartungsvorrichtung dafür ausgelegt ist, auf dem Bildschirm ein Element zum Anzeigen einer Identifikationsinformation und des Zustands jeder der Vielzahl von Speicherbatterietafeln, ein Element zum Auswählen und Zuweisen einer Speicherbatterietafel, die ein Objekt der Invalidierung entsprechend der zu wartenden Speicherbatterietafel aus der Vielzahl von Speicherbatterietafeln ist, und ein Element zum Eingeben eines Befehls zum dritten Signal für die Invalidierung anzuzeigen.

4. Energiespeichersystem nach Anspruch 1,
wobei das erste Signal oder das zweite Signal einen Normalzustand, einen abnormalen Zustand oder einen Warnzustand als Zustand umfasst und
wenn der Zustand ein abnormaler Zustand oder ein Warnzustand ist, die Invalidierung anwendbar ist.

5. Energiespeichersystem nach Anspruch 1,
wobei das erste Signal oder das zweite Signal ein Codesignal umfasst, das zumindest einen Zustand von Überspannung, Überstrom, Überladung, Überentladung, Übertemperatur oder Übertragungsunterbrechung angibt und
wobei, wenn der Zustand ein spezifisches Codesignal ist, das einen spezifischen Zustand angibt, die Invalidierung anwendbar ist.

6. Wartungsverfahren in einem Energiespeichersystem, das Folgendes umfasst:
eine Vielzahl von Speicherbatterietafeln, wobei jede Speicherbatterietafel mit einer oder mehreren Speicherbatterien ausgestattet ist;
eine oder mehrere Relaistafeln, die mit der Vielzahl von Speicherbatterietafeln elektrisch verbunden und kommunikativ verbunden sind;
eine oder mehrere Energiesteuervorrichtungen, die mit der einen oder den mehreren Relaistafeln elektrisch verbunden und kommunikativ verbunden sind und das Laden/Entladen der Vielzahl von Speicherbatterietafeln steuern; und
eine Wartungsvorrichtung zum Unterstützen von Wartungsarbeiten an der Vielzahl von Speicherbatterietafeln durch eine Wartungsperson,
wobei das Wartungsverfahren die folgenden Schritte umfasst:
Senden eines ersten Signals zum Senden des Zustands an die Relaistafel durch die Speicherbatterietafel an die Relaistafel basierend auf dem Überwachen eines Zustands einschließlich Spannung, Strom und Temperatur der einen oder mehreren Speicherbatterien;
Empfangen des ersten Signals und Senden an die Energiesteuervorrichtung eines zweiten Signals zum Senden des durch das erste Signal angegebenen Zustands an die Energiesteuervorrichtung durch die Relaistafel;
Empfangen des zweiten Signals und, wenn der durch das zweite Signal angegebene Zustand ein spezifischer Zustand ist, derartiges Ausführen von Steuerung durch die Energiesteuervorrichtung, dass die Vielzahl von Speicherbatterietafeln nicht in Einheiten der Vielzahl von Speicherbatterietafeln, einschließlich der Speicherbatterietafel, die mit der Relaistafel verbunden ist und von der aus das erste Signal gesendet wurde, arbeiten;
bevor die Wartungsperson Wartungsarbeiten an einer zu wartenden Speicherbatterietafel aus der Vielzahl von Speicherbatterietafeln beginnt, kommunikatives Verbinden der Wartungsvorrichtung mit der Relaistafel, die mit der zu wartenden Speicherbatterietafel verbunden ist, aus der Vielzahl von Relaistafeln durch die Wartungsperson;
Empfangen einer durch die Wartungsperson vorgenommenen Eingabeoperation und Anzeigen eines Bildschirms zum Unterstützen der Wartungsarbeiten für die Wartungsperson und Senden eines dritten Signals zum temporären Invalidieren des ersten Signals oder des zweiten Signals an die Relaistafel, die mit der zu wartenden Speichertafel verbunden ist, durch die Wartungsvorrichtung bei Empfangen der Operation, die die durch die Wartungsperson zu wartende Speicherbatterietafel zuweist, über den Bildschirm;
temporäres Invalidieren des ersten Signals oder des zweiten Signals bei Empfangen des dritten Signals durch die Relaistafel;
Durchführen der Wartungsarbeiten der durch die Wartungsperson zu wartenden Speicherbatterietafel in einem Zustand, in dem die Invalidierung durchgeführt wird und die Speicherbatterietafeln mit Ausnahme der zu wartenden Speicherbatterietafel in Betrieb sind; und
kommunikatives Trennen der Wartungsvorrichtung von der Relaistafel, nachdem die Wartungsarbeiten abgeschlossen sind.

7. Wartungsverfahren in einem Energiespeichersystem nach Anspruch 6, wobei das Verfahren die folgenden Schritte umfasst:
Senden eines Invalidierungsstartsignals als das dritte Signal durch die Wartungsvorrichtung bei Empfangen einer Operation eines Invalidierungsstartbefehls für die durch die Wartungsperson zu wartende Speicherbatterietafel über den Bildschirm;
Starten einer Invalidierung des ersten Signals oder des zweiten Signals durch die Relaistafel bei Empfangen des Invalidierungsstartsignals;
Senden eines Invalidierungsendsignals als das dritte Signal durch die Wartungsvorrichtung bei Empfangen einer Operation eines Invalidierungsendbefehls für die durch die Wartungsperson zu wartende Speicherbatterietafel über den Bildschirm; und
Beenden der Invalidierung des ersten Signals oder des zweiten Signals durch die Relaistafel bei Empfangen des Invalidierungsendsignals.

8. Wartungsverfahren in einem Energiespeichersystem nach Anspruch 6,
wobei die Wartungsarbeiten beim Schritt des Durchführens der Wartungsarbeiten an der zu wartenden Speicherbatterietafel durch die Wartungsperson in einem Zustand durchgeführt werden, in dem die zu wartende Speicherbatterietafel elektrisch entkoppelt ist, und die zu wartende Speicherbatterietafel dann elektrisch verbunden wird.

9. Wartungsverfahren in einem Energiespeichersystem nach Anspruch 6, wobei das Verfahren die folgenden Schritte umfasst:
Empfangen des zweiten Signals, Ausgeben eines Alarms, wenn der durch das zweite Signal angegebene Zustand ein spezifischer Zustand ist, und Beenden einer Operation der Vielzahl von Speicherbatterietafeln in Einheiten der Vielzahl von Speicherbatterietafeln, einschließlich der Speicherbatterietafel, die mit der Relaistafel verbunden ist und von der aus das erste Signal gesendet wurde, durch die Energiesteuervorrichtung;
elektrisches Trennen der zu wartenden Speicherbatterietafel durch die Wartungsperson;
Wiederaufnehmen der Operation der Vielzahl von Speicherbatterietafeln in Einheiten der Vielzahl von Speicherbatterietafeln, die mit der Relaistafel verbunden sind, durch die Energiesteuervorrichtung in einem Zustand, in dem die zu wartende Speicherbatterietafel elektrisch getrennt ist;
Durchführen der Wartungsarbeiten an der durch die Wartungsperson zu wartenden Speicherbatterietafel in einem Zustand, in dem die Speicherbatterietafeln mit Ausnahme der zu wartenden Speicherbatterietafel in Betrieb sind;
elektrisches Verbinden mit der gewarteten Speicherbatterietafel; und
Abbrechen der Invalidierung, nachdem die Wartungsarbeiten abgeschlossen sind.

## Revendications

1. Système de stockage d'énergie comprenant :
une pluralité de panneaux de batteries d'accumulateurs (3) dans lesquels chaque panneau de batteries d'accumulateurs est équipé d'une ou plusieurs batteries d'accumulateurs ;
un ou plusieurs panneaux de relais (2) connectés électriquement, et connectés en communication à la pluralité de panneaux de batteries d'accumulateurs ;
un ou plusieurs dispositifs de commande de puissance (1) connectés électriquement audit un ou auxdits plusieurs panneaux de relais et connectés en communication audit un ou auxdits plusieurs panneaux de relais, et commandant la charge/décharge de la pluralité de panneaux de batteries d'accumulateurs ; et
un dispositif de maintenance (5) destiné à prendre en charge des travaux de maintenance de la pluralité de panneaux de batteries d'accumulateurs, réalisés par un technicien de maintenance ;
**caractérisé en ce que** le panneau de batteries d'accumulateurs inclut :
une unité de surveillance (32) apte à surveiller un état incluant une tension, un courant et une température de ladite une ou desdites plusieurs batteries d'accumulateurs ; et
une unité de commande de batteries d'accumulateurs (BCU31) apte à transmettre, au panneau de relais, sur la base de la surveillance de l'état, un premier signal (F1) en vue de transmettre l'état au panneau de relais ; et
le panneau de relais inclut :
une unité de connexion en parallèle (22) à laquelle ladite une ou lesdites plusieurs batteries d'accumulateurs de la pluralité de panneaux de batteries d'accumulateurs sont connectées en parallèle ;
une unité de connexion (23) à laquelle le dispositif de maintenance est connecté en communication ; et
une unité de commande de batteries d'accumulateurs de supervision (unité BCU21 de supervision) apte à recevoir le premier signal et apte à transmettre un deuxième signal (F2) visant à transmettre l'état indiqué par le premier signal au dispositif de commande de puissance ;
le dispositif de commande de puissance est apte à recevoir le deuxième signal, et lorsque l'état indiqué par le deuxième signal correspond à un état spécifique, il est apte à mettre en œuvre une commande de sorte que la pluralité de panneaux de batteries d'accumulateurs n'opère pas dans des unités de la pluralité de panneaux de batteries d'accumulateurs incluant le panneau de batteries d'accumulateurs qui est connecté au panneau de relais et à partir duquel le premier signal a été transmis ;
le dispositif de maintenance inclut :
une unité de connexion (53) destinée à être connectée en communication au panneau de relais, l'unité de connexion qui est connectée en communication au panneau de relais étant connectée au panneau de batteries d'accumulateurs devant faire l'objet d'une opération de maintenance, parmi la pluralité de panneaux de relais, par le technicien de maintenance, avant que le technicien de maintenance ne commence les travaux de maintenance sur un panneau de batteries d'accumulateurs devant faire l'objet d'une opération de maintenance, parmi la pluralité de panneaux de batteries d'accumulateurs, et l'unité de connexion étant déconnectée en communication du panneau de relais par le technicien de maintenance lorsque les travaux de maintenance sont achevés ;
une unité d'écran (54) apte à recevoir une opération d'entrée saisie par le technicien de maintenance, et apte à afficher un écran, pour prendre en charge les travaux de maintenance, au technicien de maintenance ; et
une unité de commande (51) apte à transmettre un troisième signal (M), destiné à invalider temporairement le premier signal ou le deuxième signal, à l'unité de commande de batteries d'accumulateurs de supervision du panneau de relais connecté au panneau de batteries d'accumulateurs devant faire l'objet d'une opération de maintenance, lorsqu'une opération désignant le panneau de batteries d'accumulateurs devant faire l'objet d'une opération de maintenance par le technicien de maintenance est reçue par l'intermédiaire de l'unité d'écran ; et
dans lequel l'unité de commande de batteries d'accumulateurs de supervision du panneau de relais, lors de la réception du troisième signal, est apte à invalider temporairement le premier signal ou le deuxième signal.

2. Système de stockage d'énergie selon la revendication 1,
dans lequel l'unité de commande du dispositif de maintenance est apte à transmettre, lors de la réception, par l'intermédiaire de l'unité d'écran, de l'opération d'instruction de début d'invalidation, pour le panneau de batteries d'accumulateurs devant faire l'objet d'une opération de maintenance par le technicien de maintenance, un signal de début d'invalidation, sous la forme du troisième signal, et, apte à transmettre, lors de la réception d'une opération d'instruction de fin d'invalidation, un signal de fin d'invalidation, sous la forme du troisième signal ; et
dans lequel l'unité de commande de batteries d'accumulateurs de supervision du panneau de relais est apte à démarrer, lorsque le signal de début d'invalidation est reçu, l'invalidation du premier signal ou du deuxième signal, et est apte à mettre fin, lorsque le signal de fin d'invalidation est reçu, à l'invalidation du premier signal ou du deuxième signal.

3. Système de stockage d'énergie selon la revendication 1,
dans lequel l'unité d'écran du dispositif de maintenance est apte à afficher, sur l'écran, un élément d'affichage d'un élément d'informations d'identification et l'état de chaque panneau de la pluralité de panneaux de batteries d'accumulateurs, un élément de sélection et de désignation d'un panneau de batteries d'accumulateurs correspondant à un objet de l'invalidation correspondant au panneau de batteries d'accumulateurs devant faire l'objet d'une opération de maintenance parmi la pluralité de panneaux de batteries d'accumulateurs, et un élément de saisie d'une instruction sur le troisième signal pour l'invalidation.

4. Système de stockage d'énergie selon la revendication 1,
dans lequel le premier signal ou le deuxième signal inclut un état normal, un état anormal ou un état d'avertissement, en tant que l'état ; et
lorsque l'état est un état anormal ou un état d'avertissement, l'invalidation est applicable.

5. Système de stockage d'énergie selon la revendication 1,
dans lequel le premier signal ou le deuxième signal inclut un signal de code indiquant au moins un état de surtension, de surintensité, de surcharge, de décharge excessive, de température excessive, ou d'interruption de communication ; et
dans lequel, lorsque l'état correspond à un signal de code spécifique indiquant un état spécifique, l'invalidation est applicable.

6. Procédé de maintenance mis en œuvre dans un système de stockage d'énergie incluant :
une pluralité de panneaux de batteries d'accumulateurs dans lesquels chaque panneau de batteries d'accumulateurs est équipé d'une ou plusieurs batteries d'accumulateurs ;
un ou plusieurs panneaux de relais connectés électriquement, et connectés en communication à la pluralité de panneaux de batteries d'accumulateurs ;
un ou plusieurs dispositifs de commande de puissance connectés électriquement audit un ou auxdits plusieurs panneaux de relais et connectés en communication audit un ou auxdits plusieurs panneaux de relais, et commandant la charge/décharge de la pluralité de panneaux de batteries d'accumulateurs ; et
un dispositif de maintenance destiné à prendre en charge des travaux de maintenance de la pluralité de panneaux de batteries d'accumulateurs, réalisés par un technicien de maintenance ;
dans lequel le procédé de maintenance comprend les étapes ci-dessous dans lesquelles :
le panneau de batteries d'accumulateurs transmet, au panneau de relais, sur la base de la surveillance d'un état incluant une tension, un courant et une température d'une ou plusieurs batteries d'accumulateurs, un premier signal pour transmettre l'état au panneau de relais ;
le panneau de relais reçoit le premier signal et transmet, au dispositif de commande de puissance, un deuxième signal pour transmettre l'état indiqué par le premier signal au dispositif de commande de puissance ;
le dispositif de commande de puissance reçoit le deuxième signal, et lorsque l'état indiqué par le deuxième signal correspond à un état spécifique, met en œuvre une commande de sorte que la pluralité de panneaux de batteries d'accumulateurs n'opère pas dans des unités de la pluralité de panneaux de batteries d'accumulateurs incluant le panneau de batteries d'accumulateurs qui est connecté au panneau de relais et à partir duquel le premier signal a été transmis ;
avant que le technicien de maintenance ne commence les travaux de maintenance sur un panneau de batteries d'accumulateurs devant faire l'objet d'une opération de maintenance, parmi la pluralité de panneaux de batteries d'accumulateurs, le technicien de maintenance connecte le dispositif de maintenance en communication avec le panneau de relais connecté au panneau de batteries d'accumulateurs devant faire l'objet d'une opération de maintenance, parmi la pluralité de panneaux de relais ;
le dispositif de maintenance reçoit l'opération d'entrée saisie par le technicien de maintenance, et affiche un écran, pour prendre en charge les travaux de maintenance, au technicien de maintenance, et lors de la réception, par l'intermédiaire de l'écran, d'une opération désignant le panneau de batteries d'accumulateurs devant faire l'objet d'une opération de maintenance par le technicien de maintenance, il transmet un troisième signal pour invalider temporairement le premier signal ou le deuxième signal, au panneau de relais connecté au panneau de batteries d'accumulateurs devant faire l'objet d'une opération de maintenance ;
le panneau de relais, lors de la réception du troisième signal, invalide temporairement le premier signal ou le deuxième signal ;
les travaux de maintenance du panneau de batteries d'accumulateurs devant faire l'objet d'une opération de maintenance par le technicien de maintenance sont mis en œuvre dans un état où l'invalidation est mise en œuvre et où les panneaux de batteries d'accumulateurs autres que le panneau de batteries d'accumulateurs devant faire l'objet d'une opération de maintenance sont en service ; et
lorsque les travaux de maintenance sont achevés, le dispositif de maintenance est déconnecté en communication du panneau de relais.

7. Procédé de maintenance mis en œuvre dans un système de stockage d'énergie selon la revendication 6, le procédé comprenant les étapes ci-dessous dans lesquelles :
le dispositif de maintenance transmet un signal de début d'invalidation, sous la forme du troisième signal, lors de la réception, par l'intermédiaire de l'écran, d'une opération d'instruction de début d'invalidation pour le panneau de batteries d'accumulateurs devant faire l'objet d'une opération de maintenance par le technicien de maintenance ;
le panneau de relais démarre l'invalidation du premier signal ou du deuxième signal lors de la réception du signal de début d'invalidation ;
le dispositif de maintenance transmet un signal de fin d'invalidation, sous la forme du troisième signal, lors de la réception, par l'intermédiaire de l'écran, d'une opération d'instruction de fin d'invalidation pour le panneau de batteries d'accumulateurs devant faire l'objet d'une opération de maintenance par le technicien de maintenance ; et
le panneau de relais met fin à l'invalidation du premier signal ou du deuxième signal lors de la réception du signal de fin d'invalidation.

8. Procédé de maintenance dans un système de stockage d'énergie selon la revendication 6,
dans lequel, à l'étape de mise en œuvre des travaux de maintenance du panneau de batteries d'accumulateurs devant faire l'objet d'une opération de maintenance, les travaux de maintenance sont mis en œuvre par le technicien de maintenance dans un état où le panneau de batteries d'accumulateurs devant faire l'objet d'une opération de maintenance est électriquement déconnecté, et où, ensuite, le panneau de batteries d'accumulateurs devant faire l'objet d'une opération de maintenance est électriquement connecté.

9. Procédé de maintenance mis en œuvre dans un système de stockage d'énergie selon la revendication 6, le procédé comprenant les étapes ci-dessous dans lesquelles :
le dispositif de commande de puissance reçoit le deuxième signal, émet une alarme lorsque l'état indiqué par le deuxième signal correspond à un état spécifique, et met fin à l'opération de la pluralité de panneaux de batteries d'accumulateurs dans des unités de la pluralité de panneaux de batteries d'accumulateurs incluant le panneau de batteries d'accumulateurs qui est connecté au panneau de relais et à partir duquel le premier signal a été transmis ;
le technicien de maintenance déconnecte électriquement le panneau de batteries d'accumulateurs devant faire l'objet d'une opération de maintenance ;
dans un état où le panneau de batteries d'accumulateurs devant faire l'objet d'une opération de maintenance est électriquement déconnecté, le dispositif de commande de puissance reprend l'opération de la pluralité de panneaux de batteries d'accumulateurs dans des unités de la pluralité de panneaux de batteries d'accumulateurs connectés au panneau de relais ;
dans un état où les panneaux de batteries d'accumulateurs, autres que le panneau de batteries d'accumulateurs devant faire l'objet d'une opération de maintenance, sont en service, les travaux de maintenance du panneau de batteries d'accumulateurs devant faire l'objet d'une opération de maintenance par le technicien de maintenance sont mis en œuvre ;
le panneau de batteries d'accumulateur faisant l'objet de l'opération de maintenance est connecté électriquement ; et
lorsque les travaux de maintenance sont achevés, l'invalidation est annulée.
